# EUROPÄISCHE PATENTSCHRIFT

(11) **EP 0 475 451 B1**
(45) Veröffentlichungstag und Bekanntmachung des Hinweises auf die Patenterteilung: **26.01.1994**
(21) Anmeldenummer: 91115599.2
(22) Anmeldetag: 13.09.1991
(51) Int. Cl.: A23L 1/015, A23L 1/32

(54) **Verfahren zur Herstellung von cholesterinreduziertem Eigelb**
Process for preparing low-cholesterol egg yolk
Procédé pour préparer du jaune d'oeuf à faible teneur en cholestérol

(30) Priorität: 14.09.1990 DE 4029287
(43) Veröffentlichungstag der Anmeldung: 18.03.1992
(73) Patentinhaber: SKW Trostberg Aktiengesellschaft, 83308 Trostberg (DE)
(72) Erfinder: Cully, Jan, Dr., W-8268 Garching (DE); Vollbrecht, Heinz-Rüdiger, Dr., W-8226 Altenmarkt (DE)
(74) Vertreter: Huber, Bernhard, Dipl.-Chem.

(56) Entgegenhaltungen:
- EP-A- 0 326 469
- EP-A- 0 327 099
- EP-A- 0 350 379
- CHEMICAL ABSTRACTS, vol. 101, 02 Juli 1984 Columbus, Ohio, USA I. JODAL ET AL.: ""Hydrolysis of cyclodextrin by Aspergillus oryzae alpha-amylase"" Seite 256; linke Spalte; ref. no. 2898B
- DATA BASE WPIL/DERWENT AN=87-296033 42 DW8742 Derwent Publications Ltd., London, GB. &JP-A-62208294 WAKUNAGA SEIYAKU 12.09.87
- DATA BASE WPI/DERWENT AN=76-19971X 11 DW7611 Derwent Publications Ltd., London, GB. &JP-A-51012942 TEIJIN KK 31.01.76

## Beschreibung

Die Erfindung betrifft ein mehrstufiges Verfahren zur Herstellung von cholesterinreduziertem Eigelb.

Cholesterin und Cholesterinester sind lipophile Substanzen, die in zahlreichen wichtigen Lebensmitteln tierischen Ursprungs, wie z.B. Eigelb, Fleisch, tierischen Fetten usw., vorkommen.

Erhöhte Cholesterinwerte im Blutserum des Menschen gelten als Risikofaktor für Arteriosklerose bzw. einer koronaren Herzkrankheit.

Durch eine Reduzierung der Cholesterinzufuhr ist es in vielen pathologischen Fällen möglich, die normalen Cholesterinwerte im Blutserum wieder zu erreichen. Aus diesem Grund zielen die Bestrebungen der Lebensmittelindustrie darauf ab, eine deutliche Reduzierung der Menge an Cholesterin bzw. Cholesterinestern in fettreichen Lebensmitteln tierischen Ursprungs vorzunehmen.

Ein wesentliches Problem ist hierbei, die sensorischen und ernährungsphysiologischen Eigenschaften der Lebensmittel weitgehend zu erhalten.

Es sind zwar schon eine Reihe von Verfahren zur Abtrennung von Cholesterin bzw. Cholesterinestern bekannt geworden, doch eignen sich viele dieser Methoden wegen chemischer Veränderungen wichtiger Bestandteile des Ausgangsmaterials (wie z.B. Proteine, Triglyceride usw.) nicht zur Reduzierung des Cholesteringehaltes in Lebensmitteln.

Ein relativ schonendes Verfahren, welches erst in jüngster Zeit bekannt geworden ist, bedient sich für die Entfernung des Cholesterins bzw. der Cholesterinester der CO₂-Hochdruckextraktion (vgl. V. Krukonis, Supercritical Fluid Processing, International Symposium on Supercritical Fluids, Nice, 1988).

Dieses Verfahren zeichnet sich zwar durch die physiologische Unbedenklichkeit des Extraktionsmittels (CO₂) aus, doch ist das Arbeiten bei hohem Druck technisch ziemlich aufwendig. Außerdem lassen sich damit Cholesterin bzw. Cholesterinester bei schonenden Bedingungen nicht selektiv entfernen, weil auch Triglyceride mitextrahiert werden. Eine Verbesserung der Selektivität durch Temperaturerhöhung ist zwar grundsätzlich möglich, doch wirkt sich diese negativ auf die Beladung des CO₂ mit Cholesterin bzw. Cholesterinestern und auf die Qualität des erhaltenen Produktes aus.

Aus der EP-A 326 469 ist es bekannt, mit Hilfe von β-Cyclodextrin Cholesterinderivate aus Eigelb zu entfernen. Nachteilig bei diesem Verfahren sind die langen Beladungszeiten und die vergleichsweise geringe Reduzierung der Cholesteringehalte im Eigelb.

Der Erfindung liegt daher die Aufgabe zugrunde, ein Verfahren zur Entfernung des Cholesterins oder/und der Cholesterinester aus Eigelb zu entwickeln, welches die genannten Nachteile des Standes der Technik nicht aufweist, sondern mit geringem technischen Aufwand und unter schonenden Bedingungen eine weitgehend selektive Reduzierung dieser Stoffe ermöglicht.

Diese Aufgabe wurde erfindungsgemäß dadurch gelöst, daß man
a) durch Zugabe von Wasser oder einer wäßrigen Salzlösung das Eigelb verdünnt,
b) Cholesterin und Cholesterinester, die im verdünnten Eigelb enthalten sind, mit β-Cyclodextrin selektiv komplexiert,
c) das mit Cholesterin oder/und Cholesterinestern beladene β-Cyclodextrin vom verdünnten Eigelb abtrennt,
d) das zugegebene Wasser wieder aus dem Eigelb entfernt,
e) die im Eigelb vorhandenen Restmengen an β-Cyclodextrin mit Hilfe von α-Amylase und/oder CTGase enzymatisch abbaut und
f) das β-Cyclodextrin durch Behandeln mit Wasser und/oder einem Alkohol aus den β-Cyclodextrinkomplexen zurückgewinnt und gegebenenfalls in die Verfahrensstufe b) zurückführt.

Es hat sich nämlich überraschenderweise gezeigt, daß man auf diese Weise Eigelbprodukte mit niedrigem Gesamtcholesteringehalt und guten sensorischen Eigenschaften erhält. Außerdem ist im so erhaltenen cholesterinreduzierten Eigelb praktisch kein β-Cyclodextrin mehr vorhanden. Daß dies gelingt war ebenfalls nicht vorhersehbar.

Beim Verfahren der Erfindung wird in der Stufe a) das Eigelb durch Zugabe von Wasser oder einer wäßrigen Salzlösung verdünnt. Die Wassermenge kann hierbei in weiten Grenzen variiert werden, doch hat es sich aus wirtschaftlichen Gründen als vorteilhaft erwiesen, 10 bis 400 Gew.-%, vorzugsweise 100 bis 300 Gew.-% Wasser, bezogen auf das Ausgangsgewicht an Eigelb, einzusetzen. Bei dieser Wasserzugabe fällt die Granulafraktion als Feststoff aus und kann sehr einfach nach üblichen fest/flüssig-Trennmethoden, beispielsweise durch Zentrifugation, vom flüssigen Eigelbplasma abgetrennt werden.

In diesem Fall wird im weiteren Verfahren anstelle von Eigelb das Eigelbplasma eingesetzt.

Anstelle von Wasser kann man auch eine wäßrige Salzlösung dem Eigelb zusetzen. Bei dieser Ausführungsform wird eine Auftrennung der Eigelbemulsion in Granulafraktion und Eigelbplasma verhindert. Als Salzlösung wird vorzugsweise eine 5 bis 20 %ige NaCl-Lösung oder eine 1 bis 15% ige NH₄HCO₃-Lösung oder eine 1 bis 10 %ige NH₄HCO₃-Lösung eingesetzt, um den gewünschten Verdünnungsgrad zu erreichen.

In der nachfolgenden Stufe b) des erfindungsgemäßen Verfahrens erfolgt dann die Entfernung des Cholesterins und der Cholesterinderivate aus dem verdünnten Eigelb bzw. Eigelbplasma durch Komplexierung mit β-Cyclodextrin, das eine besonders selektive Bindung der Cholesterine ermöglicht.

Die Menge des β-Cyclodextrins kann in weiten Grenzen variiert werden, doch werden vorzugsweise 3 bis 40 Gew.-% β-Cyclodextrin, bezogen auf die Trockenmasse des Eigelbs, eingesetzt.

Bei dieser Komplexierung mit β-Cyclodextrin, die nach bekannten Methoden wie z.B. durch einfaches Mischen oder Rühren erfolgen kann, werden je Menge an eingesetztem β-Cyclodextrin etwa 60 bis 99 % des Cholesterins und der Cholesterinester entfernt, während die übrigen Eigelbbestandteile weitgehend in der flüssigen Phase verbleiben. Durch die vorhergehende Verdünnung des Eigelbs mit Wasser ist es möglich, die Entfernung des Cholesterins mit β-Cyclodextrin auch bei tieferen Temperaturen zwischen 4 und 20°C sehr schonend und vollständig durchzuführen. Besonders bevorzugt erfolgt die Komplexierung durch Rühren des Gemisches bei 4 bis 10°C.

In der Stufe c) des erfindungsgemäßen Verfahrens wird das mit Cholesterin oder/und Cholesterinestern beladene β-Cyclodextrin von der flüssigen Eigelbphase abgetrennt. Hierbei können grundsätzlich die in der Technik üblichen Verfahren und Methoden zur Trennung von Feststoffen und Flüssigkeiten verwendet werden. Wegen der raschen und vollständigen Trennung wird erfindungsgemäß bevorzugt die Zentrifugation eingesetzt. Andere Trennverfahren wie z.B. die Filtration sind ebenfalls gut geeignet.

Nach Abtrennung der β-Cyclodextrin-Komplexe können gegebenenfalls die zugegebenen Salze nach bekannten Methoden aus dem Eigelb entfernt werden, falls die Gegenwart dieser Salze bei bestimmten Anwendungszwecken unerwünscht ist. Im Falle von NH₄HCO₃ kann die Entfernung sehr einfach dadurch vorgenommen werden, daß man diese Verbindung durch Erhitzen der Eigelbmischung auf 40 bis 80°C abdampfen läßt. Vorzugsweise wird die Verdampfung im Vakuum bei einer Temperatur von 55 bis 70°C vorgenommen. Will man NaCl aus dem Eigelb entfernen, so wird dies vorzugsweise durch Dialyse, Elektrodialyse, Cross-Flow-Ultrafiltration o.ä. Methoden bewerkstelligt.

Nach der Abtrennung der β-Cyclodextrin-Komplexe vom weitgehend cholesterinfreien verdünnten Eigelb bzw. Eigelbplasma und gegebenenfalls Entfernung der Salze wird das Eigelb(plasma) in Stufe d) so weit aufkonzentriert, bis es den ursprünglichen Feststoffgehalt wieder erreicht hat. Dieser Schritt kann mit den üblichen Methoden wie Vakuumverdampfung oder Membrantechnik sehr schonend und problemlos durchgeführt werden.

In der Stufe e) des erfindungsgemäßen Verfahrens werden die im Eigelb vorhandenen Restmengen an Cyclodextrin, im allgemeinen von 0,1 bis 1,0 Gew.-%, mit Hilfe von α-Amylase und/oder CTGase enzymatisch abgebaut. Vorzugsweise werden hierbei α-Amylasen ausgewählt aus den durch Mikroorganismen der Gruppe Aspergillus niger, Aspergillus oryzae, Bacillus polymyxa, Hausschwein-Pankreas-Amylase, Bacillus coagulans sowie Flavobacterium gebildeten oder abgeleiteten α-Amylasen eingesetzt. Aus der Gruppe der CTGasen (Cyclodextrin-Trans-Glycosylasen = EC 2.4.1.19) sind die durch Bakterien der Gruppe Bacillus (beispielsweise Bacillus macerans, Bacillus megaterium, Bacillus stearothermophilus, Bacillus circulans und Bacillus ohbensis), Klebsiella (z.B. pneumoniae), Micrococcus (z.B. varians) und alkalophilische Bakterien, beispielsweise Nr. 38-2 und 17-1, gebildeten oder abgeleiteten CTGasen besonders geeignet. Diese α-Amylasen bzw. CTGasen ermöglichen einen praktisch vollständigen Abbau des β-Cyclodextrins. Vor der Zugabe der Enzyme zum Eigelb empfiehlt es sich, den pH-Wert des Eigelbs auf das jeweilige pH-Optimum des Enzyms einzustellen, was z.B. mit den üblichen für Lebensmittel geeigneten Säuren wie Zitronensäure erfolgen kann. Die erforderliche Menge an Enzym richtet sich im wesentlichen nach dem Ausgangsgehalt an β-Cyclodextrin im Eigelb und beträgt bei der α-Amylase in der Regel 10 bis 500 FAU pro g zu entfernendes β-Cyclodextrin. (1 FAU = Fungal α-Amylase Unit baut unter Standardbedingungen (Substrat: lösliche Stärke, Inkubationszeit 7 bis 20 Min., Temperatur 37°C, pH = 4,7) 5,26 g Stärke in einer Stunde ab). Im Falle der CTGasen werden diese vorzugsweise in einer Menge von 0,5 bis 20 U pro g zu entfernendes β-Cyclodextrin eingesetzt. (1 Unit = Umwandlung von 1 µmol Substrat pro Minute). Man kann auch mit größeren Mengen an Enzym arbeiten, doch werden diese schnell unwirtschaftlich, weil keine bessere Wirkung damit verbunden ist. Die Behandlungsbedingungen wie Temperatur und Zeitdauer können in weiten Grenzen variiert werden, doch haben sich Temperaturen zwischen 5 bis 65°C als besonders vorteilhaft erwiesen, wobei Behandlungszeiten von 0,5 bis 50 Stunden üblich sind. Gemäß einer bevorzugten Ausführungsform werden Mischungen von α-Amylase und CTGase verwendet.

Es ist auch möglich, den enzymatischen Abbau des Cyclodextrins in der verdünnten Eigelbphase, d.h. vor dem Aufkonzentrierungsschritt, vorzunehmen, also die Reihenfolge der Stufen d) und e) umzukehren. Dies wird aber nicht bevorzugt.

Nach der Enzymbehandlung kann für den Fall, daß die Cholesterinentfernung im Eigelbplasma vorgenommen wurde, die abgetrennte Granulafraktion im Eigelbplasma resuspendiert werden.

Das praktisch cholesterinfreie Eigelb kann dann je nach Verwendungszweck weiterverarbeitet werden. So ist es möglich, dem Eigelb die entsprechende Menge an Eiweiß zuzusetzen, um ein cholesterinreduziertes Vollei-Produkt herzustellen.

In der Stufe f) des erfindungsgemäßen Verfahrens wird das mit Cholesterin und/oder Cholesterinestern komplexierte β-Cyclodextrin gegebenenfalls gereinigt und dann regeneriert. Dieser evtl. Reinigungsschritt wird durch Waschen mit Wasser oder einer wäßrigen Salzlösung wie z.B. NaCl- oder NH₄HCO₃-Lösung vorgenommen. Die Menge an eingesetztem Wasser ist relativ breit variierbar. In der Regel reicht jedoch die 1 bis 5-fache Menge, bezogen auf das Gewicht des β-Cyclodextrin-Komplexes, aus, um eine ausreichende Trennung der β-Cyclodextrinkomplexe von eventuellen Verunreinigungen wie z.B. Proteinen zu erreichen. Gemäß einer bevorzugten Ausführungsform wird der β-Cyclodextrin-Cholesterin-Komplex mit der 1 bis 2-fachen Menge Wasser angerührt und der Feststoff (β-Cyclodextrin-Komplex) abgetrennt, beispielsweise durch Zentrifugation. Das im wesentlichen proteinhaltige Waschwasser kann gegebenenfalls zur Verdünnung des Eigelbs (Stufe a) wiederverwendet werden.

Im Anschluß an die gegebenenfalls erfolgte Waschung werden die β-Cyclodextrin-Komplexe mit Wasser und/oder Alkohol behandelt, wobei das β-Cyclodextrin von Cholesterin(-derivaten), sowie evtl. mitgerissenen Fetten befreit wird. Die Temperatur des Wassers oder Alkohols beträgt vorzugsweise 40 bis 100°C, um die β-Cyclodextrin-Komplexe zu destabilisieren und das freigesetzte β-Cyclodextrin gleichzeitig im Wasser zu lösen. Als Alkohol kann ein C₁ bis C₄-Alkohol, vorzugsweise Ethanol, verwendet werden.

Zur Regenerierung des Cyclodextrins aus den Komplexen reicht Z.B. die 3 bis 10-fache Menge am Wasser oder Alkohol.

Das auf diese Weise erhaltene Fett-Cholesterin-Gemisch kann, gegebenenfalls nach Rückgewinnung des Alkohols, direkt als Rohstoff in der kosmetischen Industrie verwendet oder einer Weiterverarbeitung zur Gewinnung des Cholesterins zugeführt werden.

Das mit Wasser oder mit Alkohol, gegebenenfalls in mehreren Stufen, gereinigte β-Cyclodextrin wird vorzugsweise in Wasser aufgelöst und in Form einer wäßrigen Lösung oder nach Wasserverdampfung als Pulver wieder für die Komplexierung der Cholesterinderivate in Stufe b) eingesetzt.

Diese Rückgewinnung bzw. Recyclisierung des β-Cyclodextrins stellt einen wesentlichen wirtschaftlichen Vorteil des erfindungsgemäßen Verfahrens dar. Außerdem erhält man so ein Eigelb mit einem um ca. 80 bis 95 % reduzierten Gesamtcholesteringehalt sowie mit Cyclodextrinrestgehalten von < 20 ppm. Aufgrund dieser guten Reduzierung des Cholesterin- bzw. β-Cyclodextringehaltes, verbunden mit den weiteren Vorteilen wie geringer technischer Aufwand und gute sensorische Qualität der erhaltenen Eigelbprodukte, eignet sich das erfindungsgemäße Verfahren besonders gut für die technische Durchführung.

Die nachfolgenden Beispiele sollen die Erfindung näher erläutern.

### Beispiel 1

2 kg Eigelb (Trockenmasse 950 g) mit einem Cholesteringehalt von 1,2 % wurden mit 2 kg einer wäßrigen 10 Gew.-%igen NaCl-Lösung vermischt.

Anschließend wurde das Eigelb-Salzgemisch mit 280 g β-Cyclodextrin versetzt und 60 Minuten lang bei 5°C gerührt. Danach wurde das beladene β-Cyclodextrin durch Zentrifugation von der Eigelbphase abgetrennt.

Die verdünnte Eigelbphase wurde daraufhin einer Cross-Flow-Ultrafiltration unterworfen, wobei der Feuchtigkeitsgehalt auf den ursprünglichen Wert eingestellt und der NaCl-Gehalt etwa halbiert wurde. Im nächsten Schritt wurde durch Elektrodialyse der NaCl-Gehalt auf einen Wert von ca. 0,3 Gew.-% gesenkt.

Schließlich wurde das Eigelb mit dem Enzympräparat Fungamyl 800 (1000 FAU/kg Material) 45 Minuten lang bei pH = 5,5 und 50°C inkubiert, wobei der β-Cyclodextringehalt von ca. 0,5 % auf < 20 ppm reduziert wurde.

Als Produkt wurde ein Eigelb mit einem Gesamtcholesteringehalt von 0,12 % erhalten, was einer 90 %igen Reduzierung gegenüber unbehandeltem Eigelb entspricht.

350 g des abgetrennten β-Cyclodextrin-Cholesterin-Komplexes, einschließlich mitgerissener Fette und Proteine, wurden mit 400 ml Wasser vermischt und der Feststoff von der flüssigen Phase durch Zentrifugation abgetrennt. Die proteinhaltige wäßrige Lösung wurde zur Verdünnung des Eigelbs weiterverwendet. Der als Feststoff abgetrennte β-Cyclodextrin-Cholesterin-Komplex wurde mit der neunfachen Menge an Ethanol (98 %ig) in mehreren Stufen gewaschen. Anschließend wurde die ethanolische Phase vom festen β-Cyclodextrin durch Zentrifugation abgetrennt. Das β-Cyclodextrin wurde daraufhin in heißem Wasser aufgelöst und von ungelösten Bestandteilen durch Filtration befreit. Aus dieser Lösung wurden schließlich 198 g reines β-Cyclodextrin gewonnen, welches bei der Cholesterin-Komplexierung wiederverwendet wurde.

### Beispiel 2

2 kg Eigelb (Trockenmasse 950 g) mit einem Cholesteringehalt von 1,2 % wurden mit 2 kg einer 4 Gew.-%igen NH₄HCO₃-Lösung vermischt.

Anschließend wurde das Eigelb-Salzgemisch mit 300 g β-Cyclodextrin versetzt und 50 Minuten lang bei 5°C gerührt. Danach wurde das beladene β-Cyclodextrin von der Eigelbphase zentrifugiert.

Die verdünnte Eigelbphase wurde anschließend im Vakuum bei 65°C eingeengt, wobei NH₄HCO₃ entfernt und der Feuchtigkeitsgehalt auf den ursprünglichen Wert eingestellt wurde.

Schließlich wurde der pH-Wert des Eigelbs mit Zitronensäure auf 6,0 eingestellt und mit dem Enzympräparat Funamyl 800 (300 FAU/kg Material) versetzt. Nach einer 45-minütigen Inkubation bei 50°C wurden 50 U einer CTGase (EG 2.4.1.19) von Bacillus macerans zugegeben und weitere 45 Minuten bei 50°C inkubiert.

Als Produkt wurde ein Eigelb mit einem Gesamtcholesteringehalt von 0,1 % erhalten, was einer 92 %igen Reduzierung gegenüber unbehandeltem Eigelb entspricht. In dem Produkt konnten keine Restmengen an β-Cyclodextrin nachgewiesen werden (Nachweisgrenze 20 ppm).

350 g des abgetrennten β-Cyclodextrin-Cholesterin-Komplexes, einschließlich mitgerissener Fette und Proteine, wurden mit 3 800 g Wasser vermischt und 30 Minuten lang gekocht. Anschließend wurde diese Lösung durch eine Filtration von ungelösten Bestandteilen befreit. Aus dieser Lösung wurden schließlich 205 g reines β-Cyclodextrin gewonnen, welches bei der Cholesterin-Komplexierung wiederverwendet wurde.

### Beispiel 3

2 kg Eigelb (Trockenmasse 950 g) mit einem Gesamtcholesteringehalt von 1,2 % wurden mit destilliertem Wasser in einem Gewichtsverhältnis von 1 : 3 vermischt und 15 Minuten bei 4°C zentrifugiert.

6,3 kg der so erhaltenen überstehenden Plasmafraktion wurden von der Granulafraktion dekantiert und mit 238 g β-Cyclodextrin 60 Minuten lang bei 4°C durch Rühren innig vermischt. Danach wurde das beladene β-Cyclodextrin durch Zentrifugation von der flüssigen Plasmaphase abgetrennt.

Die Plasmaphase wurde mit einem Gemisch von Fungamyl 800 (400 FAU/kg Material) und einer CTGase aus Bacillus macerans (10 U/kg Ausgangsmaterial) bei pH 5,5 und 50°C 120 Minuten inkubiert.

Daraufhin wurde die auf diese Weise behandelte Plasmafraktion einer Vakuumverdampfung bei 50°C unterworfen, wobei der Feuchtigkeitsgrad auf den ursprünglichen Wert eingestellt wurde. Die abgetrennte Granulafraktion wurde im eingeengten Eigelbplasma resuspendiert und die ganze Masse im Verhältnis 1 : 2 mit Eiweiß vermischt. Als Produkt wurde ein Vollei mit einem Cholesteringehalt von 0,07 % erhalten.

350 g des abgetrennten β-Cyclodextrin-Komplexes wurden mit 700 g Wasser vermischt und der Feststoff durch Zentrifugation von wasserlöslichen Verunreinigungen, wie z.B. Proteinen, befreit. Der β-Cyclodextrin-Komplex wurde anschließend dreimal mit 900 g Ethanol 60 Minuten gekocht. Der durch Filtration abgetrennte Feststoff wurde in kochendem Wasser aufgelöst, durch Filtration von ungelösten Rückständen befreit, die erhaltene β-Cyclodextrin-Lösung eingeengt und einer Kristallisation unterworfen, wobei 160 g reines β-Cyclodextrin zurückgewonnen wurde.

## Patentansprüche

1. Verfahren zur Herstellung von cholesterinreduziertem Eigelb,
**dadurch gekennzeichnet,**
daß man
a) durch Zugabe von Wasser oder einer wäßrigen Salzlösung das Eigelb verdünnt,
b) Cholesterin und Cholesterinester, die im verdünnten Eigelb enthalten sind, mit β-Cyclodextrin selektiv komplexiert,
c) das mit Cholesterin oder/und Cholesterinestern beladene β-Cyclodextrin vom verdünnten Eigelb abtrennt,
d) das zugegebene Wasser wieder aus dem Eigelb entfernt,
e) die im Eigelb vorhandenen Restmengen an β-Cyclodextrin mit Hilfe von α-Amylase und/oder CTGase Cyclodextrin-Trans-Glycosylase = EC 2.4.1.19) enzymatisch abbaut und
f) das β-Cyclodextrin durch Behandeln mit Wasser und/oder einem Alkohol aus den β-Cyclodextrinkomplexen zurückgewinnt und gegebenenfalls in die Verfahrensstufe b) zurückführt.

2. Verfahren nach Anspruch 1,
**dadurch gekennzeichnet**,
daß man zur Verdünnung des Eigelbs 10 bis 400 Gew.-% Wasser, bezogen auf das Ausgangsgewicht an Eigelb einsetzt.

3. Verfahren nach Anspruch 2,
**dadurch gekennzeichnet**,
daß man 100 bis 300 Gew.-% Wasser zusetzt.

4. Verfahren nach einem der vorhergehenden Ansprüche,
**dadurch gekennzeichnet,**
daß man nach der Wasserzugabe in Stufe a) die Granulafraktion vom Eigelbplasma durch Zentrifugation abtrennt.

5. Verfahren nach Anspruch 1,
**dadurch gekennzeichnet,**
daß man zur Verdünnung des Eigelbs eine 5 bis 20 Gew.-%ige NaCl-Lösung verwendet.

6. Verfahren nach Anspruch 1,
**dadurch gekennzeichnet,**
daß man zur Verdünnung des Eigelbs eine 1 bis 15 Gew.-%ige NH₄HCO₃-Lösung verwendet.

7. Verfahren nach einem der vorhergehenden Ansprüche,
**dadurch gekennzeichnet,**
daß man in Stufe b) 3 bis 40 Gew.-% β-Cyclodextrin, bezogen auf die Trockenmasse des Eigelbs, zusetzt.

8. Verfahren nach einem der vorhergehenden Ansprüche,
**dadurch gekennzeichnet**,
daß man die zugegebenen Salze nach der Abtrennung der β-Cyclodextrinkomplexe in Stufe c) aus dem Eigelb wieder entfernt.

9. Verfahren nach Anspruch 8,
**dadurch gekennzeichnet,**
daß man das NH₄HCO₃ bei Temperaturen von 40 bis 80°C, insbesondere 55 bis 70°C, im Vakuum abdampft.

10. Verfahren nach Anspruch 8,
**dadurch gekennzeichnet,**
daß man NaCl durch Cross-Flow-Ultrafiltration und Elektrodialyse vom verdünnten Eigelb abtrennt.

11. Verfahren nach einem der vorhergehenden Ansprüche,
**dadurch gekennzeichnet,**
daß man das Wasser aus dem Eigelb in Stufe d) durch Vakuumdestillation entfernt.

12. Verfahren nach einem der vorhergehenden Ansprüche,
**dadurch gekennzeichnet,**
daß man zum enzymatischen Abbau des β-Cyclodextrins in Stufe e) mindestens eine α-Amylase, ausgewählt aus den durch Mikroorganismen der Gruppe Aspergillus niger, Aspergillus oryzae, Bacillus polymyxa, Hausschwein-Pankreas-Amylase, Bacillus coagulans sowie Flavobacterium gebildeten oder abgeleiteten α-Amylasen, einsetzt.

13. Verfahren nach Anspruch 12,
**dadurch gekennzeichnet,**
daß man die α-Amylase in einer Menge von 10 bis 500 FAU (Fungal α-Amylase Unit bant unter Standardbedingungen) pro g zu entfernendes β-Cyclodextrin verwendet.

14. Verfahren nach einem der Ansprüche 1 bis 11,
**dadurch gekennzeichnet,**
daß man zum enzymatischen Abbau des β-Cyclodextrins in Stufe e) mindestens eine CTGase, ausgewählt aus den durch Bakterien der Gruppe Bacillus, Klebsiella, Micrococcus und alkalophilischen Bakterien gebildeten oder abgeleiteten CTGasen, einsetzt.

15. Verfahren nach Anspruch 14,
**dadurch gekennzeichnet,**
daß man die CTGase in einer Menge von 0,5 bis 20 U (1 unit = Umwandlung von 1 µmol Substrat pro Minute) pro g zu entfernendes β-Cyclodextrin verwendet.

16. Verfahren nach einem der Ansprüche 12 bis 15,
**dadurch gekennzeichnet,**
daß man den enzymatischen Abbau bei 5 bis 65°C durchführt.

17. Verfahren nach einem der vorhergehenden Ansprüche,
**dadurch gekennzeichnet,**
daß man nach dem enzymatischen Abbau des β-Cyclodextrins die abgetrennte Granulafraktion im Eigelbplasma resuspendiert.

18. Verfahren nach einem der vorhergehenden Ansprüche,
**dadurch gekennzeichnet,**
daß man in Stufe f) zur Regenerierung des Cyclodextrins aus den β-Cyclodextrin-Cholesterin-Komplexen die 3 bis 10-fache Menge an Wasser oder Alkohol verwendet.

19. Verfahren nach Anspruch 18,
**dadurch gekennzeichnet,**
daß man die Wasser oder/und Alkoholbehandlung bei 40 bis 100°C vornimmt.

20. Verfahren nach den Ansprüchen 18 oder 19,
**dadurch gekennzeichnet,**
daß man die Wäsche mit dem Alkohol, vorzugsweise Ethanol, in mehreren Stufen durchführt.

21. Verfahren nach einem der der vorhergehenden Ansprüche,
**dadurch gekennzeichnet,**
daß man das gereinigte β-Cyclodextrin in Form einer wäßrigen Lösung in die Stufe b) zurückführt.

## Claims

1. Process for the production of cholesterol-reduced egg yolk, characterised in that one
a) dilutes the egg yolk by addition of water or of an aqueous salt solution,
b) selectively complexes cholesterol and cholesterol esters which are contained in the diluted egg yolk with β-cyclodextrin,
c) separates off the β-cyclodextrin loaded with cholesterol and/or cholesterol esters from the diluted egg yolk,
d) again removes the added water from the egg yolk,
e) enzymatically decomposes the residual amounts of β-cyclodextrin present in the egg yolk with the help of α-amylase and/or CTGase (cyclodextrin transglycosylase = EC 2.4.1.19) and
f) recovers the β-cyclodextrin by treatment with water and/or an alcohol from the β-cyclodextrin complexes and possibly returns to the process step b).

2. Process according to claim 1, characterised in that, for the dilution of the egg yolk, one uses 10 to 400 wt.% of water, referred to the starting weight of the egg yolk.

3. Process according to claim 2, characterised in that one adds 100 to 300 wt.% of water.

4. Process according to one of the preceding claims, characterised in that, after the water addition in step a), one separates off the granula fraction from the egg yolk plasma by centrifuging.

5. Process according to claim 1, characterised in that, for the dilution of the egg yolk, one uses a 5 to 20 wt.% NaCl solution.

6. Process according to claim 1, characterised in that, for the dilution of the egg yolk, one uses a 1 to 15 wt.% NH₄HCO₃ solution.

7. Process according to one of the preceding claims, characterised in that, in step b), one adds 3 to 40 wt.% of β-cyclodextrin, referred to the dry weight of the egg yolk.

8. Process according to one of the preceding claims, characterised in that, after the separation of the β-cyclodextrin complexes in step c), one again removes the added salts from the egg yolk.

9. Process according to claim 8, characterised in that one evaporates off the NH₄HCO₃ at temperatures of 40 to 80°C, especially of 55 to 70°C, in a vacuum.

10. Process according to claim 8, characterised in that one separates off NaCl from the dilute egg yolk by cross-flow ultrafiltration and electrodialysis.

11. Process according to one of the preceding claims, characterised in that one removes the water from the egg yolk in step d) by vacuum distillation.

12. Process according to one of the preceding claims, characterised in that, for the enzymatic breakdown of the β-cyclodextrin in step e), one uses at least one α-amylase selected from the α-amylases formed by micro-organisms of the group Aspergillus niger, Aspergillus oryzae, Bacillus polymyxa, domestic hog pancreatic amylase, Bacillus coagulans, as well as Flavobacterium or α-amylases derived therefrom.

13. Process according to claim 12, characterised in that one uses the α-amylase in an amount of 10 to 500 FAU (fungal α-amylase unit breaks down under standard conditions) per g of β-cyclodextrin to be removed.

14. Process according to one of claims 1 to 11, characterised in that, for the enzymatic breakdown of the β-cyclodextrin in step e), one uses at least one CTGase selected from the CTGases formed by bacteria of the group Bacillus, Klebsiella, Micrococcus and alkalophilic bacteria or CTGases derived therefrom.

15. Process according to claim 14, characterised in that one uses the CTGase in an amount of from 0.5 to 20 U (1 unit = conversion of 1 µmol of substrate per minute) per g of β-cyclodextrin to be removed.

16. Process according to one of claims 12 to 15, characterised in that one carries out the enzymatic breakdown at 5 to 65°C.

17. Process according to one of the preceding claims, characterised in that, after the enzymatic breakdown of the β-cyclodextrin, one resuspends the separated granula fraction in the egg yolk plasma.

18. Process according to one of the preceding claims, characterised in that, in step f), for the regeneration of the β-cyclodextrin from the β-cyclodextrin-cholesterol complexes, one uses the 3 to 10 fold amount of water or alcohol.

19. Process according to claim 18, characterised in that one carries out the water and/or alcohol treatment at 40 to 100°C.

20. Process according to claims 19 or 20, characterised in that one carries out the washing with the alcohol, preferably ethanol, in several steps.

21. Process according to one of the preceding claims, characterised in that one returns the purified β-cyclodextrin to step b) in the form of an aqueous solution.

## Revendications

1. Procédé pour la préparation de jaune d'oeuf à faible teneur en cholestérol, caractérisé en ce que
a) l'on dilue le jaune d'oeuf par addition d'eau ou d'une solution salée aqueuse,
b) l'on complexe de façon sélective le cholestérol et l'ester de cholestérol qui sont contenus dans le jaune d'oeuf dilué avec de la β-cyclodextrine,
c) l'on sépare la β-cyclodextrine chargée de cholestérol ou/et d'ester de cholestérol du jaune d'oeuf dilué,
d) l'on enlève de nouveau l'eau ajoutée du jaune d'oeuf,
e) l'on décompose les résidus en β-cyclodextrine présents dans le jaune d'oeuf par voie enzymatique à l'aide d'α-amylase et/ou de CTGase (Cyclodextrine-Trans-Glycosylase = EC 2.4.1.19), et
f) l'on récupere la β-cyclodextrine par traitement avec de l'eau et/ou avec un alcool à partir des complexes de β-cyclodextrine et éventuellement l'on recycle dans l'étape opératoire b).

2. Procédé selon la revendication 1,
caractérisé en ce que, pour la dilution du jaune d'oeuf, l'on met en oeuvre 10 à 400 % en poids d'eau, rapportés au poids de départ du jaune d'oeuf.

3. Procédé selon la revendication 2,
caractérisé en ce que l'on ajoute 100 à 300 % en poids d'eau.

4. Procédé selon l'une des revendications précédentes,
caractérisé en ce que l'on sépare après addition d'eau à l'étape a) la fraction granulée du plasma de jaune d'oeuf par centrifugation.

5. Procédé selon la revendication 1,
caractérisé en ce que pour la dilution du jaune d'oeuf, on utilise une solution de NaCl à 5 jusqu'à 20 % en poids.

6. Procédé selon la revendication 1,
caractérisé en ce que pour la dilution du jaune d'oeuf, on utilise une solution NH₄HCO₃ de 1 à 15 % en poids.

7. Procédé selon l'une quelconque des revendications précédentes,
caractérisé en ce qu'à l'étape b) on ajoute 3 à 40 % en poids de β-cyclodextrine rapportés au poids à sec du jaune d'oeuf.

8. Procédé selon l'une des revendications précédentes,
caractérisé en ce que l'on enlève de nouveau les sels ajoutés après la séparation des complexes de β-cyclodextrine à l'étape c) du jaune d'oeuf.

9. Procédé selon la revendication 8,
caractérisé en ce que l'on chasse par évaporation NH₄HCO₃ à des températures de 40 à 80°C, en particulier de 55 à 70°C.

10. Procédé selon la revendication 8,
caractérisé en ce que l'on sépare NaCl par ultrafiltration Cross-Flow et électrodialyse du jaune d'oeuf dilué.

11. Procédé selon l'une quelconque des revendications précédentes,
caractérisé en ce que l'on élimine l'eau du jaune d'oeuf à l'étape d) par distillation sous vide.

12. Procédé selon l'une des revendications précédentes,
caractérisé en ce que pour la réduction enzymatique de la β-cyclodextrine à l'étape e), l'on met en oeuvre au moins une α-amylase choisie parmi les α-amylases dérivées ou formées par les microorganismes du groupe Aspergillus niger, Aspergillus oryzae, Bacillus polymyxa, amylase de pancréas de porc domestique, Bacillus coagulans ainsi que Flavobacterium.

13. Procédé selon la revendication 12,
caractérisé en ce que l'on utilise l'α-amylase dans une quantité de 10 à 500 FAU (Unité d'α-amylase fongique cultivée dans les conditions standard) par gramme de β-cyclodextrine à extraire.

14. Procédé selon l'une des revendications 1 à 11,
caractérisé en ce que pour la réduction enzymatique de la β-cyclodextrine à l'étape e) on utilise au moins une CTGase choisie à partir de CGTases dérivées ou formées par des bactéries du groupe Bacillus, Klebsiella, Micrococcus et de bactéries alcalophiles.

15. Procédé selon la revendication 14,
caractérisé en ce que l'on utilise la CTGase dans une quantité de 0,5 jusqu'à 20 U (1 unité = transformation de 1 µmol de substrat par minute) par gramme de β-cyclodextrine à extraire.

16. Procédé selon l'une quelconque des revendications 12 à 15,
caractérisé en ce que l'on effectue la réduction enzymatique à 5 jusqu'à 65°.

17. Procédé selon l'une des revendications précédentes,
caractérisé en ce qu'après la réduction enzymatique de la β-cyclodextrine, on remet en suspension la fraction de granulés séparée dans du plasma de jaune d'oeuf.

18. Procédé selon l'une des revendications précédentes,
caractérisé en ce qu'à l'étape f) pour la régénération de la cyclodextrine à partir des complexes de β-cyclodextrine cholestérol, on utilise 3 jusqu'à 10 fois la quantité en eau ou en alcool.

19. Procédé selon la revendication 18,
caractérisé en ce que le traitement à l'eau ou/et à l'alcool s'effectue à 40 jusqu'à 100°C.

20. Procédé selon l'une des revendications 18 ou 19,
caractérisé en ce que l'on effectue le lavage à l'alcool, de préférence à l'éthanol en plusieurs étapes.

21. Procédé selon l'une des revendications précédentes,
caractérisé en ce que l'on recycle la β-cyclodextrine purifiée sous forme d'une solution aqueuse à l'étape b).
